# EUROPÄISCHE PATENTSCHRIFT

(11) **EP 0 588 112 B1**
(45) Veröffentlichungstag und Bekanntmachung des Hinweises auf die Patenterteilung: **04.02.1998**
(21) Anmeldenummer: 93113495.1
(22) Anmeldetag: 24.08.1993
(51) Int. Cl.: H04L 7/033, H04L 25/49, H04L 7/00

(54) **Anordnung zur Taktrückgewinnung**
Device for clock recovery
Dispositif pour la récuperation d'horloge

(30) Priorität: 17.09.1992 DE 4231175
(43) Veröffentlichungstag der Anmeldung: 23.03.1994
(73) Patentinhaber: SIEMENS AKTIENGESELLSCHAFT, 80333 München (DE)
(72) Erfinder: Damianoff, Wanjo, Dipl.-Ing., D-94469 Deggendorf (DE); Schlachter, Hans-Heiner, Dipl.-Ing., D-82061 Neuried (DE)

(56) Entgegenhaltungen:
- US-A- 3 982 195
- US-A- 4 984 255
- IBM TECHNICAL DISCLOSURE BULLETIN Bd. 29, Nr. 10 , März 1987 , NEW YORK US Seiten 4427 - 4428 NOMEN NESCIO 'Clock recovery phase-locked loop'
- PATENT ABSTRACTS OF JAPAN vol. 01, no. 5241 (E-1080)21. Juni 1991 & JP-A-30 076 446 (FUJITSU LTD)

## Beschreibung

Die Erfindung betrifft eine Anordnung zur Erzeugung eines Taktsignals aus einem digitalen Signal durch Auswertung der Signalflanken des digitalen Signals.

Bei digitalen Signalen werden die logischen Werte L und H durch verschiedene Signalpegel repräsentiert. Ein Wechsel der Signalpegel wird synchron zu einem Takt ausgeführt. Im allgemeinen erfolgt nicht bei jeder Taktflanke ein Signalpegelwechsel, so daß der Datentakt aus dem digitalen Signal nicht unmittelbar erkennbar ist. Aufgrund von Verzögerungen beispielsweise während einer Signalübertragung oder -verarbeitung ändern sich Pnasenlage und momentane Frequenz des digitalen Signals. Für eine zeitrichtige Verarbeitung des Signals in einer digitalen Signalverarbeitungseinrichtung ist aber ein Taktsignal notwendig, das die gleiche Frequenz oder ein Vielfaches der momentanen Frequenz des digitalen Signales aufweist und eine feste Phasenbeziehung zu diesem hat.

In der DE-OS 35 15 542 ist eine Anordnung zur Erzeugung eines Taktsignals aus einem digitalen Signal durch Auswertung der Signalflanken des digitalen Signals gezeigt. Dabei liegt bereits ein Signal in der Frequenz des digitalen Signals vor. In einer digitalen Regelschleife wird nur eine Nachstellung der phase vorgenommen.

Aus der DE-PS 35 43 826 bzw. der US-Patentschrift US-A-4 984 255 ist ein Phasenregelkreis bekannt, der ein frequenz- und phasengekoppeltes Ausgangssignal zu einem digitalen Eingangssignal erzeugt. Hierzu wird ein spannungsgesteuerter, aber nicht triggerbarer Oszillator, ein Phasendetektor und ein Tiefpaßfilter verwendet. In der DE-OS 37 28 022 ist ein weiterer Phasenregelkreis gezeigt, der einen spannungsgesteuerten, nicht triggerbaren Oszillator, einen Phasen- und einen Frequenzdetektor enthält.

Der Erfindung liegt die Aufgabe zugrunde, eine Anordnung zur Erzeugung eines Taktsignals aus einem digitalen Signal anzugeben, das an die Phase und die Frequenz des digitalen Signals gekoppelt ist.

Diese Aufgabe wird gelöst durch
(a) ein erstes Mittel zur Erzeugung eines Impulses bei einer in eine erste Richtung gerichteten Signalflanke und ein zweites Mittel zur Erzeugung eines Impulses bei einer in eine zweite, zur ersten entgegengesetzten Richtung gerichteten Signalflanke mit jeweils einem Anschluß für das digitale Signal und einen Ausgang,
(b) eine spannungsgesteuerte, triggerbare Oszillatoreinrichtung mit mindestens zwei Triggereingängen, einem Steuereingang und einem Ausgang, bei der die Triggereingänge mit je einem der Ausgänge des ersten und zweiten Mittels verbunden sind und der Ausgang der Oszillatoreinrichtung ein Ausgang für das Taktsignal ist,
(c) eine Integrationseinrichtung mit einen Eingang, der mit dem Ausgang der Oszillatoreinrichtung verbunden ist, und einem Ausgang, der mit dem Steuereingang der Oszillatoreinrichtung verbunden ist.

Im folgenden wird die Erfindung anhand der in der Zeichnung dargestellten Figuren näher erläutert. Gleiche Elemente in verschiedenen Figuren sind mit gleichen Bezugszeichen versehen. Es zeigen:
- Figur 1: eine erfindungsgemäße Anordnung zur Taktrückgewinnung,
- Figur 2: eine Ausführungsform der Anordnung nach Figur 1,
- Figur 3: ein Taktsignaldiagramm zur Anordnung der Figur 2 und
- Figur 4: ein Prinzipschaltbild einer in der Anordnung der Figur 2 enthaltenen Verzögerungsschaltung.

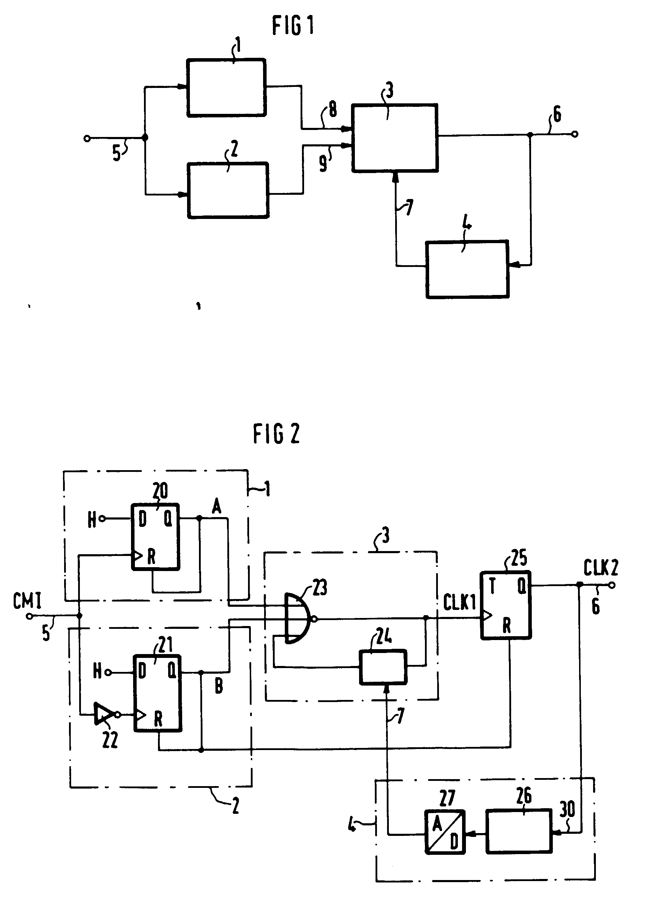

Die Anordnung der Figur 1 enthält ein erstes und ein zweites Mittel 1, 2, denen ein am Eingang 5 der Anordnung anliegendes digitales Signal zugeführt wird. Das Mittel 1 erzeugt einen Impuls bei einer positiven Signalflanke des digitalen Signals, das Mittel 2 bei einer negativen Signalflanke. Eine Oszillatoreinrichtung 3 erzeugt ein Taktsignal, dessen Frequenz durch ein an einem Steuereingang 7 anliegendes analoges Signal einstellbar ist. Die Phasenlage des von der Einrichtung 3 erzeugten Taktsignals ist über Triggereingänge 8, 9 regulierbar. Die Eingänge 8, 9 sind hierzu mit den Ausgängen der Mittel 1, 2 verbunden. Der Ausgang der spannungsgesteuerten, triggerbaren Oszillatoreinrichtung 3 ist mit einem Ausgangsanschluß 6 der Anordnung verbunden. Der Anschluß 6 ist auf eine Integrationseinrichtung 4 geführt, mit der das Ausgangstaktsignal integriert wird. Die Integration kann digital oder analog ausgeführt sein. Der Ausgang der Einrichtung 4 führt ein analoges Steuersignal, mit dem am Anschluß 7 der Oszillatoreinrichtung 3 die Oszillatorfrequenz nachgeführt wird.

Durch die Mittel 1, 2 wird sowohl eine positive als auch eine negative Datensignalflanke ausgewertet. Mit den von den Mitteln erzeugten Impulsen wird das im spannungsgesteuerten Oszillator 3 erzeugte Taktsignal getriggert. Die Oszillatoreinrichtung 3 muß deshalb auf die doppelte bzw. ein ganzzahliges Vielfaches der doppelten Datensignalfrequenz synchronisieren. Wenn am Ausgang 6 die einfache Datensignalfrequenz benötigt wird, wird zwischen den Ausgang 6 und den Ausgang der Oszillatoreinrichtung 3 eine Teilereinrichtung geschaltet. Das von der Oszillatoreinrichtung 3 erzeugte Taktsignal wird entweder direkt oder nach einer möglichen Frequenzteilung in der Integrationseinrichtung 4 integriert. Die Zeitkonstante der Integrationseinrichtung ist groß gegenüber einer Taktperiode des erzeugten Taktsignals. Die Oszillatoreinrichtung 3 und die Integrationseinrichtung 4 bilden einen einen Regelkreis. Der Regelkreis ist so abgestimmt, daß bei einem unausgeglichenen Tastverhältnis des Taktsignals die Frequenz der Oszillatoreinrichtung 3 über ihren Steuereingang 7 mit dem Ausgangssignal der Integrationseinrichtung 4 solange nachgestellt wird, bis das Taktsignal ein Tastverhältnis von 1:1 aufweist. Die erfindungsgemäße Anordnung erzeugt also ein Taktsignal, das frequenz- und pnasensynchron zu dem Taktsignal ist, das den Daten im digitalen Signal zugrundeliegt.

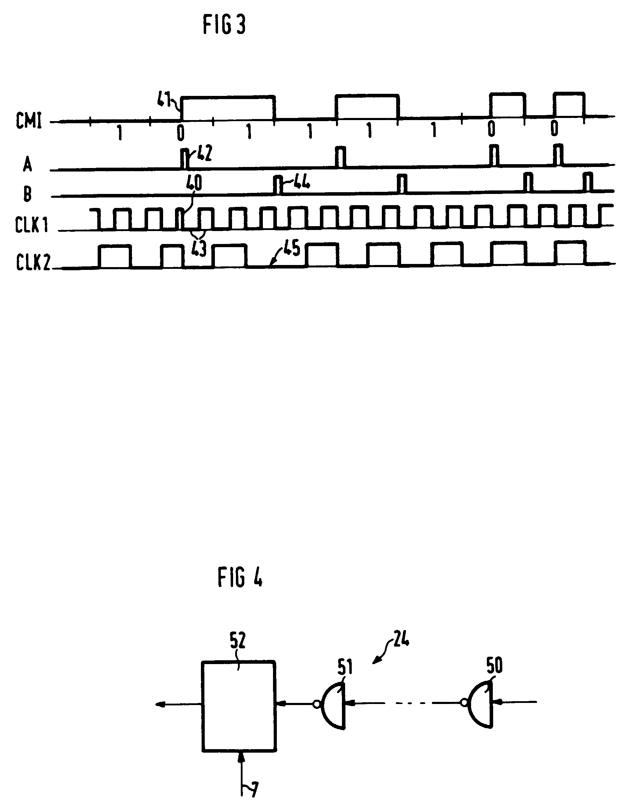

In der Figur 2 ist eine Ausführungsform der erfindungsgemäßen Anordnung der Figur 1 gezeigt. Die Funktionsweise wird am Beispiel eines CMI-(Coded Modulated Information-) Datensignals im Zusammennang mit dem Pegeldiagramm der Figur 3 erläutert. Der CMI-Code wird in der digitalen Datenübertragung verwendet, um in einem einzigen Signal sowohl die Daten- als auch die Taktinformation zu übertragen. Ein logischer L-Wert wird als Datentakt, logische H-Werte werden als alternierende Folge von L- und H-Pegeln übertragen. Das am Eingang 5 der Anordnung anliegende Signal CMI habe beispielsweise die Datenfolge 1-0-1-1-1-1-0-0.

Das Mittel 1 zum Differenzieren eines positiven Datensignalwechsels enthält einen D-Flip Flop 20, dessen Ausgang Q auf den Rücksetz-Eingang R rückgekoppelt ist. Der Daten-Eingang des D- Flip Flops 20 ist auf H gesetzt. Der Takt-Eingang ist mit dem Anschluß 5 verbunden. Das Mittel 2 zum Differenzieren einer negativen Datenflanke enthält ein D-Flip Flop 21 in entsprechender Beschaltung. Der Unterschied zum D-Flip Flop 20 besteht darin, daß der Takteingang über einen Inverter 22 mit dem Anschluß 5 verbunden ist. Das D-Flip Flop 20 speichert den an seinem Dateneingang anliegenden H-Pegel, wenn der Pegel des Signal CMI von L nach H wechselt. An Ausgang Q liegt solange ein H-Pegel vor, bis durch dieses Signal über die Rückkopplung auf den Reset-Eingang das Flip Flop wieder auf L rückgesetzt wird. Die Impulsbreite entspricht der Signalverzögerung vom Reset-Eingang R zum Ausgang Q. Das am Ausgang Q des D-Flip Flops 20 vorliegende Signal A ist in Figur 3 gezeigt. Dem D-Flip Flop 21 wird das invertierte CMI-Signal zugeführt. Das Signal B am Ausgang Q des D-Flip Flops 21 erzeugt demnach einen Impuls an einer negativen Datensignalflanke.

Die Ausgänge der D-Flip Flops 20, 21 sind mit den Triggereingängen der spannungsgesteuerten, triggerbaren Oszillatoreinrichtung 3 verbunden. Die Oszillatoreinrichtung 3 ist ein Ringoszillator mit einem Verzögerungselement 24, dessen Ausgang auf seinen Eingang invertiert rückgekoppelt ist. Die Verzögerungszeit des Verzögerungselementes 24 ist über ein an seinem Steuereingang 7 anliegendes analoges Signal einstellbar. Vorzugsweise wird das Verzögerungselement 24 gemäß einer der in der europäischen Patentanmeldung EP 0 316 607 gezeigten Grundschaltungen realisiert. In den Rückkopplungspfad des Verzögerungselementes ist ein NICHT-ODER-Schaltglied 23 geschaltet, von dem ein Eingang mit dem Ausgang des Verzögerungsgliedes 24 und zwei weitere Eingänge mit den Ausgängen der D-Flip Flops 20, 21 verbunden sind. Der Ausgang des NICHT-ODER-Schaltgliedes 23 bildet den Ausgang der Oszillatoreinrichtung 3 und ist mit dem Eingang des Verzögerungselementes 24 verbunden.

Über die Verzögerungszeit des Verzögerungselementes 24 wird die Frequenz der Oszillatoreinrichtung 3 eingestellt. Durch die an den Triggereingängen anliegenden Signale A, B wird das von der Oszillatoreinrichtung 3 erzeugte Taktsignal CLK1 bei jeder positiven und negativen Datensignalflanke auf L gesetzt. Auf diese Weise wird das Taktsignal CLK1 auf jede positive und negative Datensignalflanke synchronisiert. Dies ist in der Figur 3 an der Stelle 40 gezeigt: vor der Flanke 41 des Signals CMI war das Taktsignal CLK1 zum Signal CMI phasenverschoben. Durch den Impuls 42 wird der H-Taktabschnitt des Taktsignals CLK1 verkürzt und das Taktsignal mit der Flanke 41 synchronisiert. Die L- und H-Phasen 43 des Taktsignales CLK1 sind durch die Verzögerungszeit des Verzögerungselementes 24 bestimmt. Wenn die Frequenz des Signals CMI sich etwa durch Störungen während der Signalübertragung ändert, sind nachfolgende Flanken des Signales CMI zum Taktsignal CLK1 phasenverschoben. Die Synchronisation des Taktes CLK1 auf die entsprechende Flanke des Signals CMI erfolgt in entsprechender Weise. Die Verzögerungszeit des Verzögerungselementes 24 ist derart eingestellt, daß das Taktsignal CLK1 die doppelte oder ein Vielfaches der doppelten Frequenz der dem Signal CMI zugrungeliegenden Daten entspricht, so daß die Synchronisation auf die aufsteigende und die absteigende Datensignalflanke möglich ist.

Das Signal CLK1 wird im Ausführungsbeispiel der Figur 2 auf den Takteingang einer Teilereinrichtung 25 geführt. Durch die Einrichtung 25 in Form eines Toggle-Flip Flops wird die Frequenz des Taktsignals CLK1 halbiert. Der Reset-Eingang des Toggle-Flip Flops 25 ist mit dem Ausgang des D-Flip Flops 21 verbunden. Durch einen Impuls 44 des Signals B wird das Toggle-Flip Flop 25 auf L rückgesetzt (Stelle 45 in Figur 3). Dadurch wird die Phasenlage des Ausgangssignals CLK2 am Ausgang 6 zum Datentakt des Signales CMI auf 0° oder 180° festgelegt. Im vorliegenden Fall ergibt sich eine Phasendifferenz von Null. Würde der Reset-Eingang des Toggle-Flip Flops 25 mit dem Ausgang des D-Flip Flops 20 verbunden werden, würde sich eine Phasenlage von 180° einstellen.

Die Integrationseinrichtung 4 weist im Ausführungsbeispiel der Figur 2 einen Vorwärts-Rückwärts-Zänler 26 auf, dessen Ausgangssignal in einer Digital-Analog-Wandlereinrichtung 27 analoggewandelt wird. Der Ausgang der Wandlereinrichtung 27 ist mit dem Steuereingang 7 des Verzögerungsgliedes 24 verbunden. Ein Eingang 30 der Zähleinrichtung 26 ist mit dem Ausgang des Toggle-Flip Flops 25 verbunden und dient der Vorwärts-Rückwärts-Umschaltung. Es ist auch möglich, die Integrationseinrichtung 4 in rein analoger Ausführung, beispielsweise als Widerstands-Kondensator-Anordnung (RC-Glied) zu realisieren. Die Ansteuerung des RC-Gliedes kann über einen Differenzverstärker erfolgen, der vom Taktsignal CLK2 gesteuert wird.

Durch die Integrationseinrichtung 4 wird das Taktsignal CLK2 integriert. Bei einem ausgeglichenen Tastverhältnis erzeugt die Integrationseinrichtung 4 einen mittleren Pegelwert, der bei einem verschobenen Tastverhältnis unter-bzw. überschritten wird. Durch das Ausgangssignal wird die Verzögerungszeit des Verzögerungselementes 24 nachgestellt, so daß das Tastverhältnis des Taktsignales CLK2 ausgeglichen wird. Die erzeugten Taktsignale CLK1, CLK2 sind somit im eingeschwungenen Zustand symmetrisch.

Die in der Figur 2 gezeigte Ausführungsform der erfindungsgemäßen Anordnung hat den Vorteil, daß insbesondere bei der obengenannten Ausführung des Verzögerungsgliedes 24 die gesamte Anordnung als eine auf einem einzigen Halbleiterchip in Stromschaltertechnik integrierbare Schaltung ohne externe Bauelemente realisiert werden kann. Die Anordnung nutzt sowohl die positive wie auch die negative Taktsignalflanke des Eingangssignals zur Taktrückgewinnung und sorgt zusätzlich für ein symmetrisches Tastverhältnis.

Es ist weiterhin denkbar, anstelle der Signale A, B, die einen positiven Impuls erzeugen, Signale zu verwenden, die einen negativen Impuls erzeugen. Dazu ist es notwendig, die Daten-Eingänge der D-Flip Flops 20, 21 auf einen L-Pegel zu legen und die Ausgänge auf den Setz-Eingang der D-Flip Flops rückzukoppeln. Anstelle des NICHT-ODER- Schaltgliedes 23 ist dann ein NICHT-UND-Schaltglied zu verwenden.

Eine Ausführungsform des Verzögerungselementes 24 ist in der Figur 4 gezeigt. Die Gesamtverzögerungszeit setzt sich aus einer festen Verzögerungszeit und einer einstellbaren Verzögerungszeit zusammen. Die feste Verzögerungszeit wird durch die Hintereinanderschaltung von Schaltelementen bewirkt, die jeweils eine feste Signallaufzeit haben. Im Ausführungsbeispiel der Figur 4 wird dies durch NICHT-Schaltglieder 50, 51 erreicht. Die einstellbare Verzögerungszeit wird beispielsweise durch ein Verzögerungselement 52, das gemäß der oben angegebenen Patentveröffentlichung realisiert ist, eingestellt. Durch verschiedene Anzahlen von Schaltelementen, von denen jeweils ein Verzögerungspfad über Multiplexer- und Demultiplexereinrichtungen aktiv geschaltet wird, lassen sich unterschiedliche, feste Verzögerungszeiten erzeugen.

Die in der Figur 2 gezeigte Ausführungsform bezieht sich auf die Taktrückgewinnung aus CMI-Signalen. Die erfindungsgemäße Anordnung erzeugt aber aus allen digitalen Signalen ein an die Datenfrequenz des digitalen Signals gekoppeltes, phasenstarres Taktsignal. Ist das Eingangssignal am Eingang 5 beispielsweise auch ein Taktsignal, kann die Anordnung zur Frequenzvervielfachung verwendet werden. Eine weitere Einsatzmöglichkeit liegt beispielsweise in der Erzeugung eines Taktsignals aus einem Triggersignal, mit dem in Abhängigkeit vom Triggersignal eine digitale Signalverarbeitungseinrichtung, etwa bei Meßvorgängen mit einem Oszilloskop, gesteuert wird. Hier ist eine Verzögerungseinrichtung 24, die gemäß der Figur 4 einen festen Verzögerungsanteil aufweist, der noch zusätzlich über Multiplex- bzw. Demultiplexeinrichtungen schaltbar ist, besonders vorteilhaft, da die Frequenz des zu erzeugenden Taktsignals in einem weiten Bereich liegen kann.

## Patentansprüche

1. Anordnung zur Erzeugung eines Taktsignals aus einem digitalen Signal durch Auswertung der Signalflanken des digitalen Signals, beinhaltend
(a) ein erstes Mittel (1) zur Erzeugung eines Impulses bei einer in eine erste Richtung gerichteten Signalflanke und ein zweites Mittel (2) zur Erzeugung eines Impulses bei einer in eine zweite, zur ersten entgegengesetzten Richtung gerichteten Signalflanke mit jeweils einem Anschluß für das digitale Signal und einen Ausgang,
gekennzeichnet durch
(b) eine spannungsgesteuerte, triggerbare Oszillatoreinrichtung (3) mit mindestens zwei Triggereingängen (8, 9), einem Steuereingang (7) und einem Ausgang, bei der die Triggereingänge (8, 9) mit je einem der Ausgänge des ersten und zweiten Mittels (1, 2) verbunden sind und der Ausgang der Oszillatoreinrichtung (3) ein Ausgang (6) für das Taktsignal ist,
(c) eine Integrationseinrichtung (4) mit einen Eingang, der mit dem Ausgang der Oszillatoreinrichtung (3) verbunden ist, und einem Ausgang, der mit dem Steuereingang (7) der Oszillatoreinrichtung (3) verbunden ist.

2. Anordnung nach Anspruch 1, **dadurch gekennzeichnet**, daß die Mittel (1, 2) je ein D-Flip Flop (20, 21) enthalten, dessen Ausgang auf den Rücksetzeingang rückgekoppelt ist, dessen Takteingang mit dem Anschluß (5) für das digitale Signal verbunden ist und dessen Dateneingang von einem logischen Pegel (H) gesteuert ist und daß bei einem der Mittel (1, 2) der Takteingang über einen Inverter (22) mit dem Anschluß (5) für das digitale Signal verbunden ist.

3. Anordnung nach Anspruch 1 oder 2, **dadurch gekennzeichnet**, daß die Oszillatoreinrichtung (3) ein Ringoszillator ist, der eine Verzögerungseinrichtung (24) mit einstellbarer Verzögerungszeit enthält, deren Ausgang auf den Eingang invertiert rückgekoppelt ist, und daß der Ringoszillator ein ODER-Schaltglied (23) enthält, dessen Ausgang mit dem Eingang der Verzögerungseinrichtung (24) und dem Ausgang der Oszillatoreinrichtung (3) verbunden ist, und dessen Eingänge mit dem Ausgang der Verzögerungseinrichtung (24) und den Triggereingängen (8, 9) der Oszillatoreinrichtung (3) verbunden sind.

4. Anordnung nach Anspruch 3, **dadurch gekennzeichnet**, daß die Verzögerungseinrichtung (24) eine Hintereinanderschaltung von mindestens einem Verzögerungselement (50, 51) mit einer festen Verzögerungszeit und mindestens einem Verzögerungselement (52) mit einer einstellbaren Verzögerungszeit enthält.

5. Anordnung nach einem der Ansprüche 1 bis 4, **gekennzeichnet** durch eine Teilereinrichtung (25) mit einem Eingang und einem Ausgang, deren Eingang mit dem Ausgang der Oszillatoreinrichtung (3) und deren Ausgang mit dem Ausgang (6) für das Taktsignal verbunden ist.

6. Anordnung nach Anspruch 5, **dadurch gekennzeichnet,** daß ein Rücksetzeingang der Teilereinrichtung (25) mit dem Ausgang eines der Mittel (1, 2) verbunden ist.

7. Anordnung nach einem der Ansprüche 1 bis 6, **dadurch gekennzeichnet**, daß die Integrationseinrichtung (4) als analoge Widerstands-Kondensator-Anordnung ausgeführt ist.

8. Anordnung nach einem der Ansprüche 1 bis 6, **dadurch gekennzeichnet,** daß die Integrationseinrichtung (4) einen Vorwärts-Rückwärts-Zähler (26) enthält, dessen Steuereingang (30) für die Vorwärts-Rückwärts-Umschaltung mit dem Ausgang (6) für das Taktsignal verbunden ist, und daß die Integrationseinrichtung (4) eine Digital-Analog-Wandlereinrichtung (27) enthält, die den Ausgängen des Zählers nachgeschaltet ist und deren Ausgang der Ausgang der Integrationseinrichtung (4) ist.

## Claims

1. Arrangement for generating a clock signal from a digital signal by evaluating the signal edges of the digital signal, comprising
(a) a first means (1) for generating a pulse in the event of a signal edge directed in a first direction, and a second means (2) for generating a pulse in the event of a signal edge directed in a second direction, opposite to the first direction, each means having a terminal for the digital signal and an output,
characterized by
(b) a voltage-controlled, triggerable oscillator device (3) having at least two trigger inputs (8, 9), a control input (7) and an output, in which device the trigger inputs (8, 9) are respectively connected to one of the outputs of the first and second means (1, 2) and the output of the oscillator device (3) is an output (6) for the clock signal,
(c) an integration device (4) having an input, which is connected to the output of the oscillator device (3), and an output, which is connected to the control input (7) of the oscillator device (3).

2. Arrangement according to Claim 1, characterized in that the means (1, 2) each contain a D flip-flop (20, 21), whose output is fed back to the reset input, whose clock input is connected to the terminal (5) for the digital signal and whose data, input is controlled by a logic level (H), and in that in one of the means (1, 2), the clock input is connected via an invertor (22) to the terminal (5) for the digital signal.

3. Arrangement according to Claim 1 or 2, characterized in that the oscillator device (3) is a ring oscillator which contains a delay device (24) having an adjustable delay time, the output of which delay device is fed back inverted to the input, and in that the ring oscillator contains an OR switching element (23), whose output is connected to the input of the delay device (24) and to the output of the oscillator device (3), and whose inputs are connected to the output of the delay device (24) and to the trigger inputs (8, 9) of the oscillator device (3).

4. Arrangement according to Claim 3, characterized in that the delay device (24) contains a series circuit formed by at least one delay element (50, 51) having a fixed delay time and at lest one delay element (52) having an adjustable delay time.

5. Arrangement according to one of Claims 1 to 4, characterized by a divider device (25) having an input and an output, the input of which is connected to the output of the oscillator device (3) and the output of which is connected to the output (6) for the clock signal.

6. Arrangement according to Claim 5, characterized in that a reset input of the divider device (25) is connected to the output of one of the means (1, 2).

7. Arrangement according to one of Claims 1 to 6, characterized in that the integration device (4) is designed as an analog resistor-capacitor arrangement.

8. Arrangement according to one of Claims 1 to 6, characterized in that the integration device (4) contains an up-down counter (26), whose control input (30) for the up-down changeover is connected to the output (6) for the clock signal, and in that the integration device (4) contains a digital-to-analog convertor device (27), which is connected downstream of the outputs of the counter and whose output is the output of the integration device (4).

## Revendications

1. Dispositif pour produire un signal d'horloge à partir d'un signal numérique en exploitant les flancs du signal numérique, comprenant :
(a) un premier moyen (1) pour produire une impulsion lors d'un flanc de signal dirigé dans un premier sens et un second moyen (2) pour produire une impulsion lors d'un flanc de signal dirigé dans un second sens, opposé au premier, ayant respectivement une borne pour le signal numérique et une sortie,
caractérisé par
(b) un dispositif oscillateur (3) commandé par tension et à déclenchement, ayant au moins deux entrées de déclenchement (8, 9), une entrée de commande (7) et une sortie, dans lequel les entrées de déclenchement (8, 9) sont reliées respectivement aux sorties du premier et du second moyens (1, 2) et la sortie du dispositif oscillateur (3) est une sortie (6) pour le signal d'horloge,
(c) un dispositif intégrateur (4) ayant une entrée qui est reliée à la sortie du dispositif oscillateur (3) et une sortie qui est reliée à l'entrée de commande (7) du dispositif oscillateur (3).

2. Dispositif selon la revendication 1, caractérisé par le fait que les moyens (1, 2) comprennent chacun une bascule D (20, 21), dont la sortie est branchée en rétroaction sur l'entrée de remise à l'état initial, dont l'entrée d'horloge est reliée à la borne (5) pour le signal numérique et dont l'entrée de données est commandée par un niveau logique (H), et que, pour l'un des moyens (1, 2), l'entrée d'horloge est reliée à la borne (5) pour le signal numérique par l'intermédiaire d'un inverseur (22).

3. Dispositif selon la revendication 1 ou 2, caractérisé par le fait que le dispositif oscillateur (3) est un oscillateur en anneau comprenant un dispositif de retard (24) qui a un temps de retard réglable et dont la sortie est branchée en rétroaction, inversée, sur l'entrée, et que l'oscillateur en anneau comporte un circuit logique OU (23) dont la sortie est reliée à l'entrée du dispositif de retard (24) et à la sortie du dispositif oscillateur (3) et dont les entrées sont reliées à la sortie du dispositif de retard (24) et aux entrées de déclenchement (8, 9) du dispositif oscillateur (3).

4. Dispositif selon la revendication 3, caractérisé par le fait que le dispositif de retard (24) comporte un montage en série d'au moins un circuit de retard (50, 51) ayant un temps de retard constant et d'au moins un circuit de retard (52) ayant un temps de retard réglable.

5. Dispositif selon l'une des revendications 1 à 4, caractérisé par un dispositif diviseur (25) ayant une entrée et avec une sortie, dont l'entrée est reliée à la sortie du dispositif oscillateur (3) et dont la sortie est reliée à la sortie (6) pour le signal d'horloge.

6. Dispositif selon la revendication 5, caractérisé par le fait qu'une entrée de remise à l'état initial du dispositif diviseur (25) est reliée à la sortie d'un des moyens (1, 2).

7. Dispositif selon l'une des revendications 1 à 6, caractérisé par le fait que le dispositif intégrateur (4) est mis en oeuvre sous forme de dispositif analogique résistance-condensateur.

8. Dispositif selon l'une des revendications 1 à 6, caractérisé par le fait que le dispositif intégrateur (4) comporte un compteur-décompteur (26) dont l'entrée de commande (30) pour la commutation entre comptage et décomptage est reliée à la sortie (6) pour le signal d'horloge, et que le dispositif intégrateur (4) comporte un dispositif convertisseur numérique-analogique (27) qui est branché en aval des sorties du compteur-décompteur et dont la sortie est la sortie du dispositif intégrateur (4).
